(19) Europäisches Patentamt
European Patent Office
Office européen des brevets

(11) Publication number: 0 049 133
B1

(12) # EUROPEAN PATENT SPECIFICATION

(45) Date of publication of patent specification: 28.08.85

(21) Application number: 81304446.8

(22) Date of filing: 25.09.81

(51) Int. Cl.$^4$: C 08 K 5/00, C 08 L 1/06, C 08 L 55/02, C 10 M 129/10, C 10 M 133/12, C 10 M 135/12, C 10 M 137/02, C 10 M 141/10

(54) ## Stabilizing composition.

(30) Priority: 25.09.80 JP 133824/80

(43) Date of publication of application:
07.04.82 Bulletin 82/14

(45) Publication of the grant of the patent:
28.08.85 Bulletin 85/35

(84) Designated Contracting States:
DE FR GB IT NL

(56) References cited:
US-A-3 267 069
US-A-3 510 441
US-A-3 629 372
US-A-3 893 968

**The file contains technical information submitted after the application was filed and not included in this specification**

(73) Proprietor: SUMITOMO CHEMICAL COMPANY, LIMITED
15 Kitahama 5-chome Higashi-ku
Osaka-shi Osaka 541 (JP)

(72) Inventor: Hashimoto, Kenji
6-2, Go 1-chome
Niihama (JP)
Inventor: Fukagawa, Atsushi
6-3, Go 1-chome
Niihama (JP)
Inventor: Sasaki, Naomichi
1014, Ashima
Niihama (JP)
Inventor: Suzuki, Kanji
6-61-4-304, Shibayama
Funabashi (JP)
Inventor: Aiba, Kazuya
34-2, Aza Kuribayashi
Ohjoin Niihama (JP)
Inventor: Kimura, Osamu
6-3, Akasakadai 1-cho
Sakai (JP)
Inventor: Nakatani, Mitsuhisa
4-11-15, Kofudai Toyono-cho
Toyono-gun Osaka-fu (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 049 133 B1

Courier Press, Leamington Spa, England.

(72) Inventor: **Mitsuda, Tsutomu**
**1510-14, Habucho**
**Kishiwada (JP)**

(74) Representative: **Geering, Keith Edwin et al**
**REDDIE & GROSE 16 Theobalds Road**
**London WC1X 8PL (GB)**

**Description**

The present invention relates to non-staining stabilizing compositions for synthetic resins and rubbers and lubricating oils which comprise (I) bic(octylphenyl)amine or bis(nonylphenyl)amine or a mixture thereof, (II) at least one phosphite compound selected from tris(monononylphenyl)phosphite and tris(mixed mono and dinonylphenyl)phosphites, (III) at least one thiodipropionate compound selected from didodecyl-3,3'-thiodipropionate, ditridecyl-3,3'-thiodipropionate, ditetradecyl-3,3'-thiodipropionate and dioctadecyl-3,3'-thiodipropionate, distearyl 3,3'-thiodipropionate, and (IV) one or more phenol compounds selected from those of the formulae (IV—A), (IV—B) and (IV—C), the weight ratios I/II/III/IV being 1/0.1—10/0.2—10/0.5 respectively and the formulae (IV—A), (IV—B) and (IV—C) being as follows:

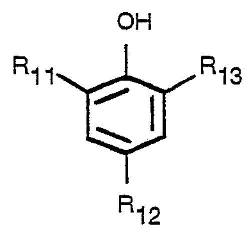

(IV—A)

wherein $R_{11}$ and $R_{13}$ are branched alkyl groups having 3 to 12 carbon atoms, and $R_{12}$ is a methyl, ethyl or $—CH_2CH_2COOR_{14}$ group (in which $R_{14}$ is an alkyl group having 1 to 20 carbon atoms);

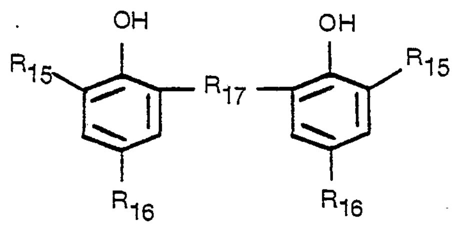

(IV—B)

wherein $R_{15}$ is a branched alkyl group having 3 to 12 carbon atoms, $R_{16}$ is a methyl or ethyl group, and $R_{17}$ is an alkylidene group having 1 to 4 carbon atoms; and

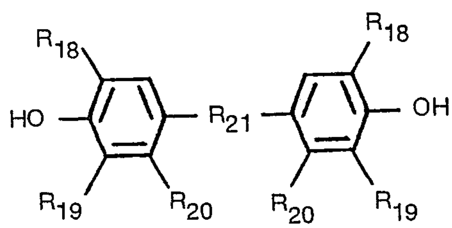

(IV—C)

wherein $R_{18}$ is a branched alkyl group having 3 to 12 carbon atoms, $R_{19}$ is a hydrogen atom or an alkyl group having 1 to 12 carbon atoms, and when $R_{19}$ is a hydrogen atom, $R_{20}$ is a methyl group and when $R_{19}$ is an alkyl group having 1 to 12 carbon atoms, $R_{20}$ is a hydrogen atom, and $R_{21}$ is a direct bond, a sulfur atom, or a methylene, $—CH_2—S—CH_2—$ or alkylidene group having 1 to 4 carbon atoms.

Synthetic resins such as polystyrene, styrene-acrylonitrile copolymers (AS resin), and acrylonitrile-butadiene-styrene copolymers (ABS resin), and synthetic rubbers such as styrene-butadiene copolymers (SBR), and acrylonitrile-butadiene copolymers (NBR) are in use as automobile parts and electrical appliance parts in many fields.

These polymers themselves are degenerated by heat, oxygen and light on storage, processing and use, deteriorating in physical properties (particularly mechanical strength) with phenomena such as color change, hardening, brittleness and generation of odor. For this reason, various stabilizing compositions are added to these polymers on production or processing thereof.

Many conventional stabilizing compositions, however, stain synthetic resins and rubbers. Particularly, when amine compounds have been added to synthetic resins and rubbers, the amines themselves have changed or decomposed to stain the polymers to a large extent.

As similar stabilizing compositions to those of the present invention, those comprising an amine compound and dialkyl 3,3'-thiodipropionate were developed (Japanese Patent Publication No. 24446/1970), but they are not satisfactory enough in non-staining property and stabilizing effect. Further, stabilizing compositions comprising dithiophosphonite, a thiodipropionate compound and a phenol

compound, and ones comprising a thiodipropionate compound, a phosphite compound and a phenol compound were developed (Japanese Patent Publication No. 23344/1973), but they are also not satisfactory enough in stabilizing effect.

US Patent No. 3629372 (Drake) discloses stabilizing compositions incorporating a particularly defined group of diphenylamine compounds the phenyl groups of which are at least di-substituted. Surprisingly, it has been found that by selecting particular mono-substituted dipheny compounds for use in the compositions of the invention particularly advantageous results are obtained.

Lubricating oils are also degenerated by heat, oxygen and light on storage and use, deteriorating in lubricating characteristics with change of viscosity and formation of sludge. The use of phenol compounds or amine compounds alone is well known, but no compositions are known which are satisfactory in stabilizing effect at high temperatures.

We have unexpectedly found that combination of the above compounds I, II, III and IV in the specified weight ratios shows superior stabilizing effect against heat, oxygen and light as compared with the prior art, as well as marked reduction in the staining property which has been inherent to the use of amine compounds.

The phenol component IV is not always present but a preferred weight ratio of components I/II/III/IV is 1/0.1—10/0.2—10/0.2—5.

The phenol compounds of formula (IV—A) include for example 2,6-di-tert-butyl-p-cresol, stearyl β-(3,5-di-tert-butyl-4-hydroxyphenyl)propionate, methyl β-(3,5-di-tert-butyl-4-hydroxyphenyl)propionate, 2,6-di-tert-butyl-4-ethyl-phenol, and 2,6-di-tert-octyl-4-methylphenol. These compounds may be used alone or in combination.

The phenol compounds of formula (IV—B) include for example 2,2′-methylenebis(6-tert-butyl-4-methylphenol), 2,2′methylenebis(6-tert-butyl-4-ethylphenol), 2,2′-methylenebis(6-α-methylcyclohexyl-4-methylphenol) and 2,2′-isopropylidenebis(6-tert-amyl-4-methylphenol). These compounds may be used alone or in combination.

The phenol compounds of formula (IV—C) include for example 4,4′-thiobis(6-tert-butyl-3-methylphenol), 4,4′-thiobis(2-methyl-6-tert-butylphenol), bis(3-methyl-5-tert-butyl-4-hydroxybenzyl)-sulfide, bis(3,5-di-tert-butyl-4-hydroxybenzyl)sulfide, 2,2′,6,6′-tetra-tert-butyl-biphenol, 4,4′-butylidenebis(6-tert-butyl-3-methylphenol), 4,4′-methylenebis(2,6-di-tert-butylphenol) and 2,2′,6,6′-tetra-tert-butylbisphenol A. These compounds may be used alone or in combination.

In terms of performance as stabilizing compositions, it is preferred that $R_{11}$, $R_{13}$, $R_{15}$ and $R_{18}$ in the formulae (IV—A), (IV—B) and (IV—C), are tertiary alkyl groups branched at the α-position having 4 to 9 carbon atoms, for example, tertiary butyl, tertiary amyl and tertiary octyl groups.

In terms of performance as stabilizing compositions, it is preferred that the phenol component is 0.2 to 5 times by weight based on the diphenylamine component, the total of the phosphite and thiodipropionate components is 2 to 15 times by weight based on the diphenylamine component and that the thiodipropionate component is larger in amount than the phosphite component.

The non-staining stabilizing compositions of the present invention are particularly suitable for synthetic resins such as polystyrene, AS resins, ABS resins; synthetic rubbers such as SBR, NBR; and lubricating oils; but they are more effective when applied to ABS resins and SBR for which a non-staining property is regarded as important.

The amount of the non-staining stabilizing compositions used is not particularly critical but preferably it is 0.05 to 10% by weight, particularly 0.1 to 5% by weight, based on the substance to be stabilized.

The non-staining stabilizing compositions of the present invention may be added as usual to substances to be stabilized without special limitations. For example, in the case of synthetic resins and rubbers, methods such as addition to polymer latices or solutions, addition to resin powders, addition to resins on pelletizing, and addition to polymers on molding are employed. In the case of lubricating oils, the compositions are added on production or use.

Specifically, methods such as mixing by rolls, screw extrusion, mixing by Banbury mixer, line blending and addition in the form of emulsion or master batch solution in suitable solvents, are employed without special limitations.

The non-staining stabilizing compositions of the present invention may be used together with other additives such as ultraviolet absorbers, photo-stabilizers, anti-oxidants, metal-inactivating agents, metallic soaps, pigments, dyes, plasticizers, and fillers.

The present invention is illustrated in detail by the following Examples.

Example 1

Stabilizing compositions, a to n, where prepared by blending the compounds in Table 1 in proportions (weight ratios) shown in Table 1, and 0.5 part by weight of each of the compositions obtained was mixed with 100 parts by weight of ABS resin to prepare respective ABS resin compositions, A to N. The resin compositions thus obtained were then measured for staining property (degree of color change), thermal resistance (degree of color change), long-term stability and light resistance by the following test methods. The results are shown in Table 2.

(1) Staining property

A test piece (70 × 120 × 3 mm) obtained by forming the ABS resin composition was allowed to stand at 100°C. for 24 hours in a gear oven, and measured for spectral reflectance by a spectrophotometer. Degree of color change, ΔE, was calculated from the spectral reflectances before and after standing using the CIE-system color difference equation (1976).

(2) Thermal resistance

A test piece (70 × 120 × 3 mm) obtained by forming the ABS resin composition was allowed to stand at 180°C. for 24 hours in a gear oven, and measured for spectral reflectance by a spectrophotometer. Degree of color change, ΔE, was calculated from the spectral reflectances before and after standing using the CIE-system color difference equation (1976).

(3) Long-term stability

The ABS resin composition was stored in a house at room temperature for 6 months. The composition was then measured for impact strength with notch (1/4", 23°C.) according to the method described in ASTM D—256—56, and the percentage retention of strength was calculated therefrom.

(4) Light resistance

1) Colour change

A test piece (70 × 120 × 3 mm) obtained by forming the ABS resin composition was exposed to Sunshine weather-O-meter for 100 hours and measured for spectral reflectance by a spectrophotometer. Degree of color change, ΔE, was calculated from the spectral reflectances before and after exposure using the CIE-system color difference equation (1976).

2) Gloss

A test piece after exposure obtained in the same manner as in 1) and the same test piece before exposure were measured for reflectance at an angle of incidence of 60° by a glossmeter. The percentage retention of gloss was calculated from the reflectances obtained.

The ABS resin used in this example was a 1:1 (weight ratio) mixture of ABS graft polymer and AS copolymer produced as usual according to the formulations described below.

ABS graft polymer:

| | Part by weight |
|---|---|
| Polybutadiene (solid matter) | 50 |
| Styrene | 30 |
| Acrylonitrile | 20 |
| Potassium peroxide | 0.5 |
| Potassium oleate | 0.5 |
| Dodecyl mercaptan | 0.4 |

AS copolymer:

| | Part by weight |
|---|---|
| Styrene | 70 |
| Acrylonitrile | 30 |
| Potassium persulfate | 0.5 |
| Sodium laurylbenzenesulfonate | 2 |

TABLE 1

| Compound | Present stabilizing composition | | | | | | | | Stabilizing composition as control | | | | | |
|---|---|---|---|---|---|---|---|---|---|---|---|---|---|---|
| | a | b | c | d | e | f | g | h | i | j | k | l | m | n |
| I. Diphenylamine compound | | | | | | | | | | | | | | |
| Bis(octylphenyl)amine | 1 | 1 | | | 1 | 1 | | | 1 | | 1 | 1 | 1 | 1 |
| Bis(nonylphenyl)amine | | | 1 | 1 | | | 1 | 1 | | | | | | |
| II. Phosphite compound | | | | | | | | | | | | | | |
| Tris(mononony lphenyl)phosphite | | 3 | | 1.5 | | | 3 | 1.5 | | 1 | 2 | | 15 | 5 |
| Tris(mixed mono and dinonylphenyl)-phosphite | 5 | | 4 | | 1 | 3 | | | | | | | | |
| III. Thiodipropionate compound | | | | | | | | | | | | | | |
| Ditridecyl 3,3′-thiodipropionate | | 6 | | 1.5 | | | | 1.5 | 2 | 2 | | 2 | 14 | |
| Distearyl 3,3′-thiodipropionate | 4 | | 5 | | 2.5 | 4 | 4 | | | | | | | 4 |
| IV. Phenol compound | | | | | | | | | | | | | | |
| A. 2,6-Di-tert-butyl-p-cresol | | | | 1 | | | 1 | | | | | | | |
| Stearyl β-(3,5-di-tert-butyl-4-hydroxyphenyl)propionate | | | | | | | | 1 | | | | | | |
| B. 2,2′-Methylenebis(6-tert-butyl-4-methylphenol) | | | | | 0.5 | | | | 2 | | 1 | | | |
| C. 4,4′-Thiobis(6-tert-butyl-3-methylphenol) | | | | | | 2 | 1 | | | | | | | 10 |

TABLE 2

| | ABS resin compositions | | | | | | | | | | | | | |
|---|---|---|---|---|---|---|---|---|---|---|---|---|---|---|
| | Present examples | | | | | | | | Comparative examples | | | | | |
| | A | B | C | D | E | F | G | H | I | J | K | L | M | N |
| Staining property ΔE | 2.0 | 1.5 | 1.5 | 1.0 | 1.0 | 1.0 | 1.0 | 1.0 | 5.0 | 2.5 | 6.0 | 5.0 | 3.0 | 2.5 |
| Thermal resistance ΔE | 2.0 | 1.5 | 1.5 | 1.0 | 1.0 | 1.0 | 1.0 | 1.0 | 5.5 | 7.5 | 3.0 | 6.0 | 7.0 | 5.5 |
| Long-term stability % | 93 | 94 | 92 | 98 | 98 | 98 | 97 | 95 | 75 | 65 | 65 | 70 | 71 | 60 |
| Light resistance: | | | | | | | | | | | | | | |
| Color change ΔE | 2.5 | 2.0 | 2.0 | 1.0 | 1.0 | 1.0 | 1.0 | 1.0 | 6.0 | 6.0 | 4.5 | 5.0 | 7.0 | 6.5 |
| Gloss % | 85 | 87 | 85 | 96 | 95 | 93 | 95 | 94 | 70 | 60 | 75 | 70 | 70 | 68 |

Example 2

Styrene/butadiene rubber (SBR 1502, produced by Sumitomo Chemical Company, Limited) containing no stabilizing composition was mixed on a roll together with the stabilizing compositions each described below and in Table 1 to prepare SBR compositions. The compositions obtained were measured for thermal stability to obtain the results as shown in Table 3. The thermal stability was evaluated based on a time required for the gel content (toluene-insoluble portion) of the SBR composition to reach 10% by weight when the composition was allowed to stand at 100°C. in a gear oven (the time required was expressed in Gel I.P.) and the color of the composition after standing at the same temperature for 40 hours in the gear oven.

Symbol of stabilizing composition:

o: Styrenated phenol
p: 1:3 (weight ratio) Mixture of styrenated phenol and tris-nonylphenylphosphite
q: 2,6-Di-Tert-butyl-p-cresol
r: 1:3 (weight ratio) Mixture of 2,6-di-tert-butyl-p-cresol and trisnonylphenylphosphite
s: "Wingstay T" (Trade Mark) — Octylated butylated phenol.
t: 1:3 (weight ratio) Mixture of Wingstay T and trisnonylphenylphosphite
u: "Agerite Geltrol" (Trade Mark) — a mixture of tris(alkylphenyl)phosphite and polyalkyl phenol.

TABLE 3

| | Stabilizing Composition | | | Thermal Stability | |
|---|---|---|---|---|---|
| | Symbol | Dosage (PHR) | Initial SBR-staining property | Gel I.P. (hour) | Color of SBR composition after 40 hours' ageing |
| Present Example | d | 1.0 | Non-staining *1 | 300 | Yellow |
| | e | 1.0 | ,, | 340 | ,, |
| | f | 1.0 | ,, | 280 | ,, |
| | g | 1.0 | ,, | 310 | ,, |
| Comparative Example | i | 1.0 | ,, | 160 | Yellowish brown |
| | k | 1.0 | Pale reddish brown | 260 | Reddish brown |
| | j | 1.0 | Non-staining | 230 | Yellowish brown |
| | m | 1.0 | ,, | 215 | ,, |
| | o | 1.0 | ,, | 55 | ,, |
| | p | 1.0 | ,, | 60 | Yellow |
| | q | 1.0 | ,, | 150 | ,, |
| | r | 1.0 | ,, | 160 | ,, |
| | s | 1.0 | Yellow | 120 | Yellowish brown |
| | t | 1.0 | Non-staining | 140 | ,, |
| | u | 1.0 | ,, | 75 | Yellow |
| No addition | | | ,, | 5 | Yellowish brown |

*1 Indicates the color of the non-aged SBR composition itself (pale yellow).

Example 3

A lubricating oil (Neutral Oil #200, produced by Daikyō Sekiyu Co.) was mixed with each of the present stabilizing compositions formulated as shown in Table 4 and stabilizing compositions as control shown below. Fifty grams of each mixed oil was oxidized as follows according to the rotary bomb oxidation test method in ASTM D—2272: To the mixed oil were added distilled water (5 ml) and copper catalyst (copper spirals obtained by polishing, washing with ethyl ether and drying), and the whole was placed in a glass container and oxidized in an oxygen atmosphere. In this test, the glass container was placed in a stainless steel container connected with a recording pressure gauge, and then the steel container was placed in an oil bath kept at 150°C. and rotated about its axis at 100 r.p.m. with the axis inclined by 30 degrees against a horizontal line. Before heating, the oxygen pressure in the steel container was adjusted to about $7 \times 10^5$ Pa and it rose with the progress of heating to a maximum which was kept constant until beginning of oxidation. A time required for the oxygen pressure to drop by $2.0 \times 10^5$ Pa from the maximum, referred to as oxygen absorption induction period, was recorded in minutes. The results are shown in Table 5.

TABLE 4

| Compound | Present stabilizing composition | | | | | | | |
|---|---|---|---|---|---|---|---|---|
| | A | B | C | D | E | F | G | H |
| I. Diphenylamine compound | | | | | | | | |
| Bis(octylphenyl)amine | 1 | 1 | 1 | | | | | |
| Bis(nonylphenyl)amine | | | | 1 | 1 | 1 | 1 | 1 |
| II. Phosphite compound | | | | | | | | |
| Tris(mononoylphenyl)phosphite | 1 | 1 | 1 | .1 | 0.5 | 0.5 | 1 | 1 |
| III. Thiodipropionate compound | | | | | | | | |
| Ditridecyl-3,3′-thiodipropionate | 1.5 | 1.5 | 1.5 | 1.5 | 3 | 6 | 1.5 | 1.5 |
| IV. Phenol compound | | | | | | | | |
| A. 2,6-Di-tert-butyl-p-cresol | 1 | | | 1 | 3 | 4 | | |
| B. 2,2′-Methylenebis(6-tert-butyl-4-methylphenol) | | 1 | | | | | 1 | |
| C. 4,4′-Methylenebis(2,6-di-tert-butylphenol) | | | 1 | | | | | 1 |

Stabilizing composition as control:

I : Bis(octylphenyl)amine

J : Bis(nonylphenyl)amine

K : Tris(mononoylphenyl)phosphite

L : Ditridecyl-3,3′-thiodipropionate

M : 2,6-Di-tert-butyl-p-cresol

N : 2,2′-Methylenebis(6-tert-butyl-4-methylphenol)

O : 4,4′-Methylenebis(2,6-di-tert-butylphenol)

TABLE 5

| | Dosage (wt. %) \ Symbol of stabilizing composition | Present example | | | | | | | | Comparative example | | | | | | | |
|---|---|---|---|---|---|---|---|---|---|---|---|---|---|---|---|---|---|
| | | A | B | C | D | E | F | G | H | I | J | K | L | M | N | O | No addition |
| Oxygen absorption induction period | 0.2 | 450 | 515 | 395 | 440 | 420 | 460 | 510 | 400 | 95 | 90 | 40 | 75 | 105 | 120 | 95 | 35 |
| | 0.5 | 980 | 1210 | 920 | 985 | 900 | 1150 | 1195 | 910 | 275 | 260 | 55 | 210 | 350 | 385 | 250 | |

**Claims**

1. A non-staining stabilizing composition for synthetic resins and rubbers and lubricating oils which comprises (I) bis(octylphenyl)amine or bis(nonylphenyl)amine or a mixture thereof, (II) at least one phosphite compound selected from tris (mononoonylphenyl)phosphite and tris(mixed mono and dinonylphenyl) phosphites, (III) at least one thiodipropionate compound selected from didodocyl-3,3'-thiodipropionate, ditridecyl-3,3'-thiodipropionate, ditetradecyl-3,3'-thiodipropionate and dioctadecyl-3,3'-thiodipropionate, distearyl-3,3'-thiodipropionate, and (IV) one or more phenol compounds selected from those of the formulae (IV—A), (IV—B) and (IV—C), the weight ratios I/II/III/IV being 1/0.1—10/0.2—10/0—5 respectively, and the formulae (IV—A), (IV—B) and (IV—C) being as follows:

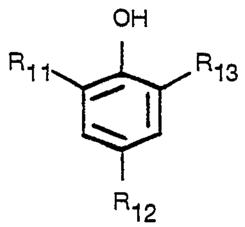

(IV—A)

wherein $R_{11}$ and $R_{13}$ are branched alkyl groups having 3 to 12 carbon atoms, and $R_{12}$ is a methyl, ethyl or $—CH_2CH_2COOR_{14}$ group (in which $R_{14}$ is n alkyl group having 1 to 20 carbon atoms);

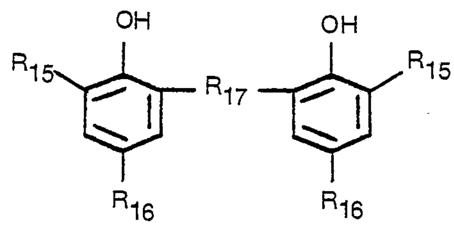

(IV—B)

wherein $R_{15}$ is a branched alkyl group having 3 to 12 carbon atoms, $R_{16}$ is a methyl or ethyl group, and $R_{17}$ is an alkylidene group having 1 to 4 carbon atoms; and

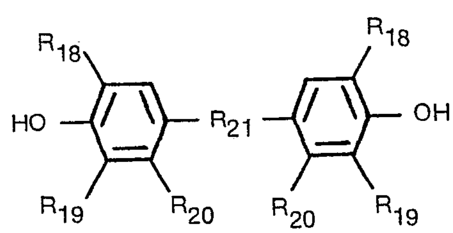

(IV—C)

wherein $R_{18}$ is a branched alkyl group having 3 to 12 carbon atoms, $R_{19}$ is a hydrogen atom or an alkyl group having 1 to 12 carbon atoms, and when $R_{19}$ is a hydrogen atom, $R_{20}$ is a methyl group and when $R_{19}$ is an alkyl group having 1 to 12 carbon atoms, $R_{20}$ is a hydrogen atom, and $R_{21}$ is a direct bond, a sulfur atom, or a methylene, $—CH_2—S—CH_2—$ or alkylidene group having 1 to 4 carbon atoms.

2. A composition according to claim 1 wherein component IV is one or more of 2,6-di-tert-butyl-p-cresol, stearyl β-(3,5-di-tert-butyl-4-hydroxyphenyl)propionate, 2,2'-methylene-bis(6-tert-butyl-4-methylphenol), 4,4'-thiobis(6-tert-butyl-3-methylphenol), 4,4'-methylenebis(2,6-di-tert-butyl-phenol) and 4,4'-butylidenebis(6-tert-butyl-3-methylphenol).

3. A composition according to claim 1 comprising (I) bis(nonylphenyl)amine, (II) tris-(mononononylphenyl)phosphite, (III) ditridecyl-3,3'-thiodipropionate, and (IV) 2,6-di-tert-butyl-p-cresol or 2,2'-methylene-bis(6-tert-butyl-4-methylphenol).

4. An acrylonitrile-butadiene-styrene copolymer stabilized with a composition according to claim 1, 2 or 3.

**Patentansprüche**

1. Nichtverfärbende stabilisierende Zubereitung für synthetische Harze und Kautschuke sowie Schmieröle, gekennzeichnet durch (I) Bis(octylphenyl)amin oder Bis(nonylphenyl)amin oder eine Mischung davon, (II) wenigstens eine Phosphitverbindung, ausgewählt aus Tris(mononononylphenyl)phosphit und Tris (gem. Mono- und Dinonylphenyl)phosphit, (III) wenigstens eine Thiodipropionatverbindung, ausgewählt aus Didodecyl-3,3'thiodipropionat, Ditridecyl-3,3'-thiodipropionat, Ditetradecyl-3,3'-thiodipropionat und Dioctadecyl-3,3'-thiodipropionat, Distearyl-3,3'-thiodipropionat, und (IV) eine oder mehrere Phenolverbindungen, ausgewählt aus denjenigen der Formeln (IV—A), (IV—B) und (IV—C), wobei die Gewichtsverhältnisse I/II/III/IV 1/0,1—10/0,2—10/0—5 betragen, wobei die Formeln (IV—A), (IV—B) und (IV—C) wie folgt sind:

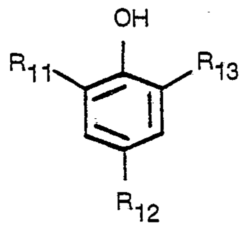

(IV—A)

worin $R_{11}$ und $R_{13}$ verzweigte Alkylgruppen mit 3 bis 12 Kohlenstoffatomen sind und $R_{12}$ Methyl-, Ethyl- oder eine $—CH_2CH_2COOR_{14}$-Gruppe bedeuten, (wobei $R_{14}$ eine Alkylgruppe mit 1 bis 20 Kohlenstoffatomen ist)

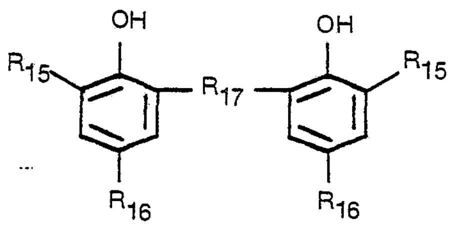

(IV—B)

worin $R_{15}$ eine verzweigte Alkylgruppe mit 3 bis 5 Kohlenstoffatomen ist, $R_{16}$ eine Methyl- oder Ethyl-Gruppe ist und $R_{17}$ eine Alkylidengruppe mit 1 bis 4 Kohlenstoffatomen bedeutet, und

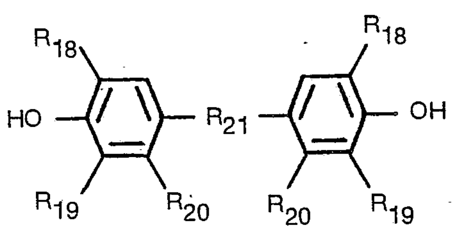

(IV—C)

worin $R_{18}$ eine verzweigte Alkylgruppe mit 3 bis 12 Kohlenstoffatomen ist, $R_{19}$ ein Wasserstoffatom oder eine Alkylgruppe mit 1 bis 12 Kohlenstoffatomen bedeutet, und, wenn $R_{19}$ ein Wasserstoffatom ist, $R_{20}$ eine Methylgruppe ist, und, wenn $R_{19}$ eine Alkylgruppe mit 1 bis 12 Kohlenstoffatomen ist, $R_{20}$ ein Wasserstoffatom ist, und $R_{21}$ eine direkte Bindung, ein Schwefelatom oder eine Methylen-, $—CH_2—S—CH_2—$ oder Alkylidengruppe mit 1 bis 4 Kohlenstoffatomen bedeutet.

2. Zubereitung nach Anspruch 1, dadurch gekennzeichnet, daß die Komponente IV aus einer oder mehreren der Verbindungen 2,6-di-tert.-Butyl-p-cresol, Stearyl β-(3,5-di-tert.-butyl-4-hydroxyphenyl)-propionat, 2,2'-Methylen-bis(6-tert.-butyl-4-methylphenol), 4,4'-thiobis(6-tert.-butyl-3-methylphenol), 4,4'-Methylen-bis(2,6-di-tert.-butyl-phenol) und 4,4'-Butyliden-bis(6-tert.-butyl-3-methylphenol) besteht.

3. Zubereitung nach Anspruch 1, gekennzeichnet durch (I) Bis(nonylphenyl)amin, (II) Tris-(mononononylphenyl)phosphit, (III) Ditridecyl-3,3'-thiodipropionat, und (IV) 2,6-Di-tert.-butyl-p-cresol oder 2,2'-Methylen-bis(6-tert.-butyl-4-methylphenol).

4. Acrylnitril/Butadien/Styrol-Copolymyeres, stabilisiert mit einer Zubereitung gemäß Anspruch 1, 2 oder 3.

**Revendications**

1. Composition non colorante pour la stabilisation de résines synthétiques et caoutchoucs et d'huiles lubrifiantes, qui comprend (I) de la bis(octylphényl)-amine ou de la bis(nonylphényl)amine ou un mélange

des deux, (II) au moins un phosphite choisi entre le phosphite de tris(monononylphényle) et des phosphites mixtes de tris(mono- et dinonylphényle), (III) au moins un thiodipropionate choisi entre le 3,3'-thiodipropionate de didodécyle, le 3,3'-thiodipropionate de ditridécyle, le 3,3'-thiodipropionate de ditétradécyle, et le 3,3'-thiodipropionate de dioctadécyle, le 3,3'-thiodipropionate de distéaryle, et (IV) un ou plusieurs composés phénoliques choisis entre des composés de formules (IV—A), (IV—B) et (IV—C), les proportions respectives en poids de I/II/III/IV étant de 1/0,1—10/0,2—10/0,5 et les formules (IV—A), (IV—B) et (IV—C) étant les suivantes:

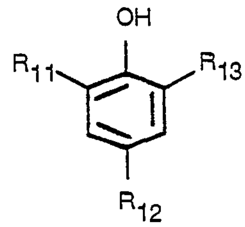

(IV—A)

où $R_{11}$ et $R_{13}$ sont des groupes alkyle ramifié ayant 3 à 12 atomes de carbone et $R_{12}$ est un groupe méthyle, éthyle ou $—CH_2CH_2COOR_{14}$ (Dans lequel $R_{14}$ est un groupe alkyle ayant 1 à 20 atomes de carbone);

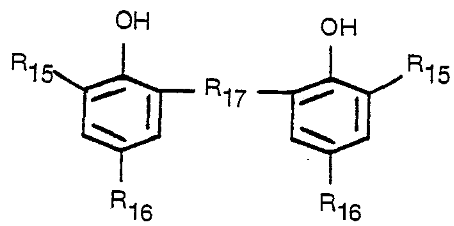

(IV—B)

où $R_{15}$ est un groupe alkyle ramifié ayant 3 à 12 atomes de carbone, $R_{16}$ est un groupe méthyle ou éthyle et $R_{17}$ est un groupe alkylidène ayant 1 à 4 atomes de carbone; et

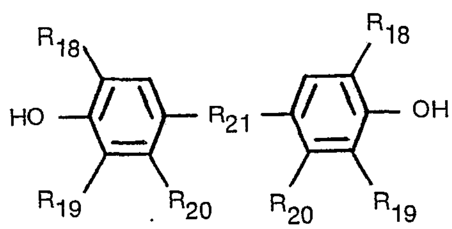

(IV—C)

où $R_{18}$ est un groupe alkyle ramifié ayant 3 à 12 atomes de carbone, $R_{19}$ est un atome d'hydrogène ou un groupe alkyle ayant 1 à 12 atomes de carbone et, lorsque $R_{19}$ est un atome d'hydrogène, $R_{20}$ est un groupe méthyle, et lorsque $R_{19}$ est un groupe alkyle ayant 1 à 12 atomes de carbone, $R_{20}$ est un atome d'hydrogène, et $R_{21}$ est une liaison simple, un atome de soufre ou un groupe méthylène, $—CH_2—S—CH_2—$ ou alkylidène ayant 1 à 4 atomes de carbone.

2. Composition suivant la revendication 1, dans laquelle le composant IV consiste en un ou plusieurs des composés tels que 2,6-di-tertio-butyl-p-crésol, β-(3,5-di-tertio-butyl-4-hydroxyphényl)propionate de stéaryle, 2,2'-méthylène-bis(6-tertio-butyl-4-méthylphénol), 4,4'-thiobis(6-tertio-butyl-3-méthylphénol), 4,4'-méthylène-bis(2,6-di-tertio-butylphénol) et 4,4'-butylidènebis(6-tertio-butyl-3-méthylphénol).

3. Composition suivant la revendication 1, comprenant (I) de la bis(nonylphényl)amine, (II) du phosphite de tris-(monononylphényle), (III) du 3,3'-thiodipropionate de ditridécyle et (IV) du 2,6-di-tertio-butyl-p-crésol ou de 2,2'-méthylène-bis(6-tertio-butyl-4-méthylphénol).

4. Un copolymère acrylonitrile-butadiène-styrène stabilisé avec une composition suivant la revendication 1, 2 ou 3.